# EUROPÄISCHE PATENTSCHRIFT

(11) **EP 3 150 911 B1**
(45) Veröffentlichungstag und Bekanntmachung des Hinweises auf die Patenterteilung: **29.05.2019**
(21) Anmeldenummer: 15188082.0
(22) Anmeldetag: 02.10.2015
(51) Int. Cl.: F21V 23/02, H01F 38/14

(54) **BELEUCHTUNGSANORDNUNG**
ILLUMINATION ASSEMBLY
SYSTEME D'ECLAIRAGE

(43) Veröffentlichungstag der Anmeldung: 05.04.2017
(73) Patentinhaber: Induperm A/S, 4800 Nykøbing Falster (DK)
(72) Erfinder: Schönert, Oliver, 59757 Arnsberg (DE)
(74) Vertreter: Lohr, Jöstingmeier & Partner

(56) Entgegenhaltungen:
- EP-A1- 1 063 468
- WO-A1-92/17929
- WO-A1-03/040612
- WO-A1-2011/057343
- US-A- 5 264 997
- US-A1- 2002 008 973

## Beschreibung

Die Erfindung betrifft eine insbesondere als Unterflurfeuer auf Flughäfen verwendete Beleuchtungsanordnung.

Die elektrische Kontaktierung von üblicherweise heute verwendeten Unterflurfeuern sieht einen 2-poligen Kupplungsstecker vor, welcher zur Vermeidung eines Eintrags von Feuchtigkeit über Dichtelemente verfügt. Um beispielsweise im Falle eines Defekts eines Leuchtmittels des Unterflurfeuers Wartungsarbeiten durchzuführen, muss vor dem Trennen der elektrischen Kontaktierung das gesamte System, welches typischerweise eine große Vielzahl von Unterflurfeuern umfasst, stromlos geschaltet werden. Eine Dekontaktierung allein des defekten Unterflurfeuers im bestromten Zustand ist nicht möglich. Ebenso ist bekannt, Unterflurfeuer berührungslos mit elektrischer Energie zu versorgen. Entsprechende Anwendungen werden beispielsweise von der Firma Impleo angeboten.

Aufgabe der vorliegenden Erfindung ist es, eine Beleuchtungsanordnung für Flughäfen mit einer verbesserten Energieversorgung bereitzustellen.

Zur Lösung der Aufgabe weist die Erfindung die Merkmale des Patentanspruchs 1 auf.

Der besondere Vorteil der Erfindung besteht darin, dass durch das Vorsehen der Ferritkerne der Wirkungsgrad der kontaktlosen Energieübertragung signifikant erhöht wird. Die Induktionsspulen und die Energieversorgungsleitungen sind dabei induktiv gekoppelt. Es ist dadurch möglich, einzelne Beleuchtungsanordnungen aus dem Gesamtsystem beispielsweise zu Wartungszwecken zu entnehmen, ohne dass das Gesamtsystem stromlos geschaltet werden muss. Die kontaktlose Energieversorgung verbessert insofern die Performance des Gesamtsystems. Zudem kann durch die Mehrteiligkeit des Ferrits die Montage der Beleuchtungsanordnung in Bezug auf das Umgreifen der Energieversorgungsleitungen vereinbart werden.

EP 1063468 A1 betrifft eine Beleuchtungsanordnung zu Befeuerung Luftfahrthindernissen wie Dächern, Hängebrückenpfeilern etc. Die Beleuchtungsanordnung hat ein Oberteil und ein Unterteil. An der Unterseite des Oberteils ist eine Sekundärseite eines Transformators angeordnet, die eine Gasentladungslampe speist. An der Oberseite des Unterteils ist die dazu komplementäre Primärseite des Transformators, die über eine zwischengeschaltete Platine mit der Versorgungsspannung verbunden wird. Ober- und Unterseite der Beleuchtungsanordnung werden durch eine Schraubverbindung miteinander gekoppelt, wobei die Oberseite der Primärseite in Anlage mit der Unterseite der Sekundärseite des Transformators gebracht wird.

WO 2011/057343 A1 betrifft eine Leuchte für einen Peitschenmast. Die Leuchte hat ein Befestigungselement, das auf dem freien Ende des Mastes fixiert wird. Am distalen Ende des Befestigungselements sitzt die Primärseite eines Transformators. Zur Montage der Leuchte wird ein entsprechendes Gegenstück mit dem Leuchtmittel an dem Befestigungselement montiert, wobei die Sekundärseite Transformators vor der Primärseite angeordnet wird.

Beispielsweise können die Induktionsspulen nach Art von vergossenen Induktionsspulen ausgebildet sein. Es ist dann im Zusammenwirken der vergossenen Induktionsspulen mit den mantelseitig isolierten Energieversorgungsleitungen ein wasserunabhängiger Betrieb möglich. Insbesondere ist es nicht erforderlich, das Energieversorgungsgehäuse gegen eindringendes Wasser zu sichern. Allein das Leuchtmodulgehäuse mit dem Leuchtmittel, der Optik und der Ansteuerung muss gegen eindringendes Wasser beziehungsweise Feuchtigkeit gedichtet sein. Insofern kann das Energieversorgungsgehäuse kostengünstig hergestellt und einfach montiert werden und die Kosten für die Beleuchtungsanordnung insgesamt sinken.

Nach einer bevorzugten Ausführungsform der Erfindung ist an dem ersten Ferritkern und dem zweiten Ferritkern je wenigstens eine Anlagefläche ausgebildet, wobei die Anlageflächen im montierten Zustand einander zugewandt und flächig aneinander angelegt sind. Vorteilhaft verbessert sich der Wirkungsgrad der Energiewandlung durch die enge Anlage der Ferritkerne weiter. Die Anlageflächen sind dabei beispielsweise plan beziehungsweise eben ausgebildet. Ein Luftspalt zwischen den Anlageflächen der Ferritkerne beziehungsweise lokale Lufteinschlüsse werden vermieden.

Nach einer Weiterbildung der Erfindung ist wenigstens ein Ferritkern segmentiert ausgebildet. Die einzelnen Ferritkernsegmente sind einander in eine Längsrichtung der Energieversorgungsleitungen in einer Reihenanordnung zugeordnet. Beispielsweise berühren einander zugewandte Stirnseiten benachbarter Ferritkernsegmente einander. Vorteilhaft wird die Anlage der Ferritkerne aneinander und damit der Wirkungsgrad der Energiewandlung durch die segmentierte Ausbildung wenigstens eines Ferritkerns weiter verbessert. Die Ferritkernsegmente können insbesondere einzeln an die Anlagefläche des anderen Ferritkerns angelegt werden. Jedes Ferritkernsegment weist hierzu einen Teil der Anlagefläche auf.

Nach einer Weiterbildung der Erfindung ist in dem Energieversorgungsgehäuse wenigstens ein Federelement vorgesehen, welches gegen einen Ferritkern verspannt ist und den einen Ferritkern mit der Anlagefläche gegen die Anlagefläche des anderen Ferritkerns andrückt. Durch das Vorsehen des Federelements wird dabei der Wirkungsgrad der Energieübertragung weiter verbessert. Beispielsweise ist vorgesehen, dass das dem einen Ferritkern gegen den anderen Ferritkern andrückende Federelement gegen die Oberschale des Energieversorgungsgehäuses abgestützt ist und dass der andere Ferritkern sich in der Unterschale des Energieversorgungsgehäuses abstützt.

Als Federelemente werden beispielsweise Blattfedern und bevorzugt aus Edelstahl gefertigte Blattfedern verwendet.

Nach einer Weiterbildung der Erfindung sind an wenigstens einem Ferritkern der Aufnahme der Energieversorgungsleitungen dienende, zueinander beabstandet ausgebildete, nutförmige Aufnahmetaschen gebildet. Die Aufnahmetaschen sind bevorzugt an einem einzigen Ferritkern beziehungsweise den Ferritkernsegmenten des einen Ferritkerns gebildet. Sie sind besonders bevorzugt im Bereich der Anlagefläche des einen Ferritkerns vorgesehen. Vorteilhaft können durch das Vorsehen der Aufnahmetaschen die Energieversorgungsleitungen und die Induktionsspulen mantelseitig besonders vorteilhaft umgriffen werden und der Wirkungsgrad der Energieübertragung wird weiter verbessert.

Durch das Vorsehen der zwei zueinander benachbarten Aufnahmetaschen an einem gleichen Ferritkern erhält der Ferritkern eine im Querschnitt E-förmige Struktur. Der so gebildete E-Ferritkern wird nach dem Einlegen der Energieversorgungsleitungen in die Aufnahmetaschen gegen den anderen Ferritkern angelegt. Der andere Ferritkern ist bevorzugt flach beziehungsweise scheibenförmig ausgebildet mit einer konstanten Dicke. Aufgrund der flachen Struktur und der konstanten Dicke ergibt sich ein I-förmiger Querschnitt. Der scheibenförmige Ferritkern wird insofern auch als I-Ferritkern bezeichnet.

Nach einer Weiterbildung der Erfindung werden für die verschiedenen Ferritkernsegmente einzelne Federelemente vorgesehen. So kann jedes Ferritkernsegment mittels eines ihm exklusiv zugeordneten Federelements gegen den anderen Ferritkern angedrückt werden.

Nach einer Weiterbildung der Erfindung ist zum Verbinden der Oberschale des Energieversorgungsgehäuses mit der Unterschale eine Schnellverschlussanordnung vorgesehen. Die Schnellverschlussanordnung sieht beispielsweise eine an der Oberschale des Energieversorgungsgehäuses schwenkbar gehaltene Verbindungsklammer vor, wobei die Verbindungsklammer im montierten Zustand des Energieversorgungsgehäuses eine an der Unterschale gebildete Haltekante umgreift zum Verbinden der Oberschale mit der Unterschale. Vorteilhaft wird durch das Vorsehen der Schnellverbindungsanordnung eine werkzeuglose Montage beziehungsweise Demontage des Energieversorgungsgehäuses gewährleistet. Wartungsarbeiten können insofern besonders schnell ausgeführt werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigt:

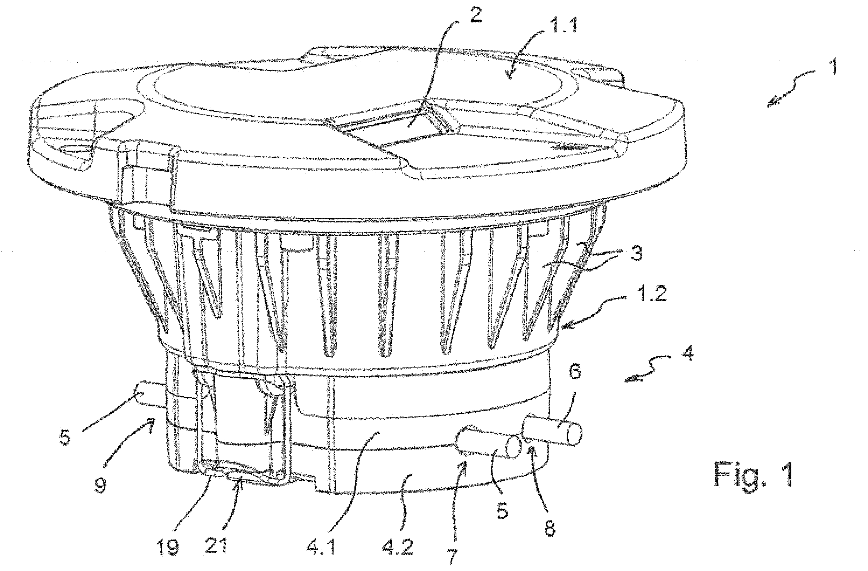

- Fig. 1: eine erfindungsgemäße Beleuchtungsanordnung im montierten Zustand,

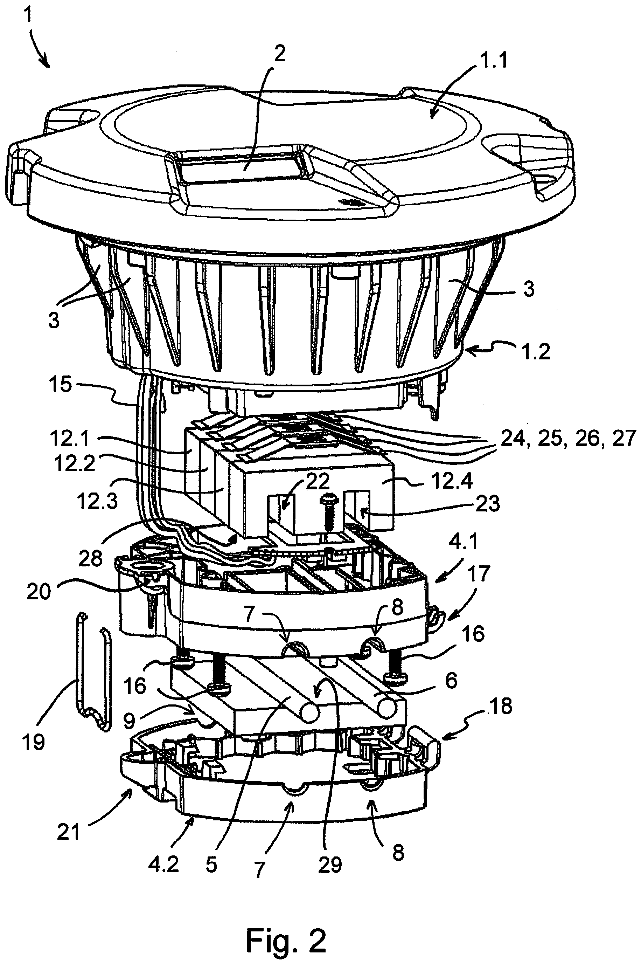

- Fig. 2: die Beleuchtungsanordnung nach Fig. 1 in einer Explosionsdarstellung,

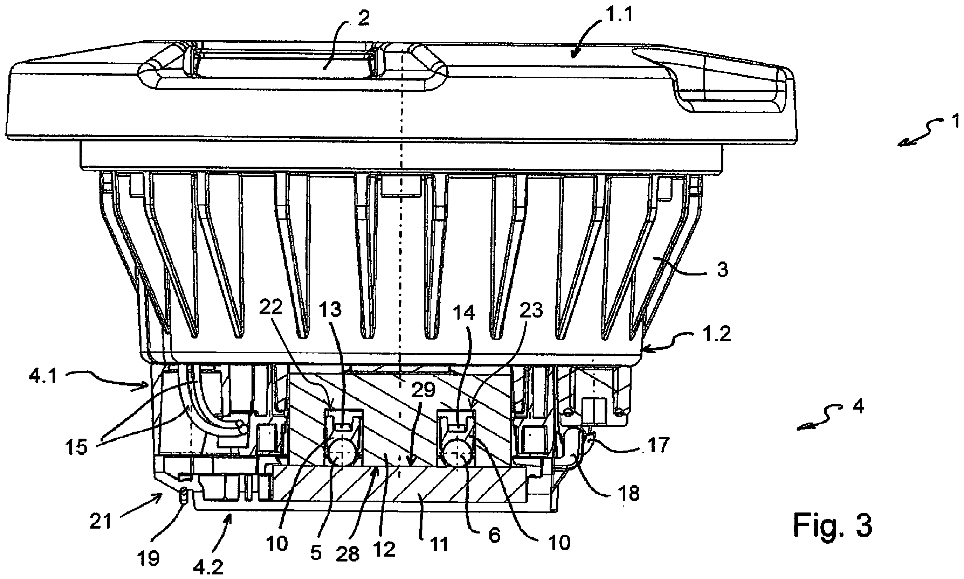

- Fig. 3: eine Seitenansicht der Beleuchtungsanordnung nach Fig. 1, welche im Bereich eines Energieversorgungsgehäuses in eine Querrichtung teilgeschnitten dargestellt ist, und

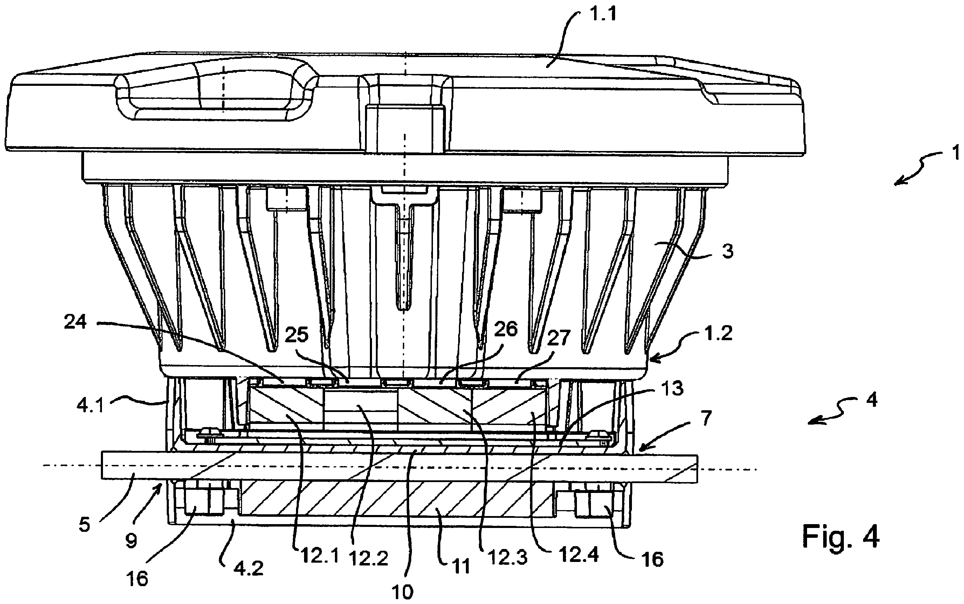

- Fig. 4: die Beleuchtungsanordnung nach Fig. 3 mit dem Energieversorgungsgehäuse in einem Längsschnitt.

Eine erfindungsgemäße Beleuchtungsanordnung, welche nach Art eines Unterflurfeuers für Flughäfen ausgebildet ist, umfasst als Geometrie bestimmende Komponenten ein Leuchtmodulgehäuse 1 und ein Energieversorgungsgehäuse 4.

Das Leuchtmodulgehäuse 1 ist mehrteilig ausgebildet mit einem Lichtauslassgehäuseteil 1.1 und einem Funktionskomponentengehäuseteil 1.2, welcher an den Lichtauslassgehäuseteil 1.1 festgelegt ist. Beispielsweise dienen nicht dargestellte Schrauben zum Festlegen des Funktionskomponentengehäuseteils 1.2 an dem Lichtauslassgehäuseteil 1.1. Das Leuchtmodulgehäuse 1 dient der Aufnahme eines nicht dargestellten Leuchtmittels, beispielsweise einer Leuchtdiode, einer dem wenigstens einen Leuchtmittel zugeordneten Optik 2, welche aus dem von dem Leuchtmittel abgestrahlten Licht eine Lichtverteilung formt, und einer ebenfalls nicht dargestellten Ansteuerung für das Leuchtmittel. Das Leuchtmodulgehäuse 1 ist insbesondere vor dem Eintritt von Feuchtigkeit geschützt beziehungsweise wasserdicht ausgebildet. Der Lichtauslassgehäuseteil 1.1 ist im montierten Zustand der Beleuchtungsanordnung oberirdisch vorgesehen, wohingegen der Funktionskomponentengehäuseteil 1.2 bevorzugt unterirdisch verbaut ist. Typischerweise sind der Lichtauslassgehäuseteil 1.1 und der Funktionskomponentengehäuseteil 1.2 aus einem metallischen Werkstoff und bevorzugt aus Aluminium gefertigt. Das Leuchtmodulgehäuse 1 erhält hierdurch eine hohe mechanische Robustheit und gewährleistet zugleich, dass während des Betriebs entstehende Wärme über das Leuchtmodulgehäuse 1 an die Umgebung abgegeben wird. Zur Verbesserung der Wärmeübergabe sind an dem Funktionskomponentengehäuseteil 1.2 in Umfangsrichtung verteilte Rippen 3 vorgesehen.

Das Energieversorgungsgehäuse 4 ist ebenfalls mehrteilig ausgebildet. Es sieht eine auf einer dem Lichtauslassgehäuseteil 1.1 abgewandten Seite an dem Funktionskomponentengehäuseteil 1.2 des Leuchtmodulgehäuses 1 angelegte Oberschale 4.1 vor. Ferner ist eine mit der Oberschale 4.1 verbundene Unterschale 4.2 vorgesehen. Die Oberschale 4.1 ist über eine Mehrzahl von Schrauben 16 mit dem Funktionskomponentengehäuseteil 1.2 lösbar verbunden. Zur schwenkbaren Verbindung der Oberschale 4.1 mit der Unterschale 4.2 ist eine Gelenkanordnung vorgesehen. Die Gelenkanordnung umfasst einen an der Oberschale 4.1 angeformten Gelenkarm 17 und einen in den Gelenkarm 17 einsetzbaren Gelenkhebel 18 vor. Der Gelenkhebel 18 ist als Teil der Unterschale 4.2 ausgebildet. Auf einer der Gelenkanordnung gegenüberliegenden Seite sieht das Energieversorgungsgehäuse 4 eine Schnellverschlussanordnung vor mit einer Verbindungsklammer 19, welche in einem montierten Zustand des Energieversorgungsgehäuses 4 eine an der Unterschale 4.2 gebildete Haltekante 21 umgreift. Die Verbindungsklammer 19 ist schwenkbar an der Oberschale 4.1 des Energieversorgungsgehäuses 4 gehalten. Die gelenkige Verbindung wird geschaffen, indem die Verbindungsklammer 19 in an der Oberschale 4.1 gebildete Aufnahmen 20 eingesetzt wird.

Das Energieversorgungsgehäuse 4 dient der Aufnahme der zur Energieversorgung der Ansteuerung beziehungsweise des Leuchtmittels notwendigen Funktionskomponenten. Insbesondere nimmt das Energieversorgungsgehäuse 4 einen ersten Ferritkern 11, einen zweiten Ferritkern 12, eine erste Induktionsspule 13, eine zweite Induktionsspule 14 sowie abschnittsweise eine erste Energieversorgungsleitung 5 und eine zweite Energieversorgungsleitung 6 auf. Zur Aufnahme der ummantelten beziehungsweise mantelseitig isolierten Energieversorgungsleitungen 5, 6 sind an dem Energieversorgungsgehäuse 4 eine erste Zugangsöffnung 7 und eine zweite Zugangsöffnung 8 sowie eine erste Ausgangsöffnung 9 und eine zweite, nicht dargestellte Ausgangsöffnung ausgebildet. Die fortlaufend ausgebildete erste Energieversorgungsleitung 5 tritt über die erste Zugangsöffnung 7 in das Energieversorgungsgehäuse 4 ein und über die erste Ausgangsöffnung 9 aus. Die zweite Energieversorgungsleitung 6 tritt über die zweite Zugangsöffnung 8 in das Energieversorgungsgehäuse 4 ein und über die zweite Ausgangsöffnung aus. In dem Energieversorgungsgehäuse 4 sind die Induktionsspulen 13, 14 der ersten Energieversorgungsleitung 5 und der zweiten Energieversorgungsleitung 6 derart zugeordnet, dass während des Betriebs eine Spannung in die Induktionsspulen 13, 14 induziert wird.

Die Ferritkerne 11, 12 umgreifen hierbei die Energieversorgungsleitungen 5, 6 und die Induktionsspulen 13, 14 mantelseitig zur Verbesserung des Wirkungsgrads der Energieübertragung.

Der erste Ferritkern 11 ist flach und scheibenförmig ausgebildet. Er weist eine konstante Dicke auf und wird nachfolgend aufgrund seiner Querschnittsgeometrie als I-Ferritkern 11 bezeichnet. An den zweiten Ferritkern 12 sind zwei zur Aufnahme der ersten Energieversorgungsleitung 5 und der zweiten Energieversorgungsleitung 6 ausgebildete Aufnahmetaschen 22, 23 gebildet. Die Aufnahmetaschen 22, 23 sind langgestreckt beziehungsweise nutförmig ausgeformt und zueinander parallel und beabstandet vorgesehen. Aufgrund seiner Querschnittsgeometrie wird der zweite Ferritkern 12 nachfolgend als E-Ferritkern bezeichnet.

Der E-Ferritkern 12 ist segmentiert ausgebildet. Er weist insgesamt vier in eine Längsrichtung der Energieversorgungsleitungen 5, 6 aneinandergereihte Ferritkernsegmente 12.1, 12.2, 12.3, 12.4 auf. Die Ferritkernsegmente 12.1, 12.2, 12.3, 12.4 sehen einander im montierten Zustand zugewandte Stirnseiten vor, wobei die Aufnahmetaschen 22, 23 für die Energieversorgungsleitungen 5, 6 sich von einer ersten Stirnseite eines jeden Ferritkernsegments 12.1, 12.2, 12.3, 12.4 bis zu der gegenüberliegenden zweiten Stirnseite des gleichen Ferritkernsegments 12.1, 12.2, 12.3, 12.4 erstrecken. Einander zugewandte Stirnseiten benachbarter Ferritkernsegmente 12.1, 12.2, 12.3, 12.4 berühren aneinander.

Die Segmentierung des zweiten Ferritkerns 12 ist ebenso wie die Anlage der Stirnseiten der einzelnen Ferritkernsegmente 12.1, 12.2, 12.3, 12.4 beispielhaft gewählt und nicht zwingend.

Um die mantelseitige Umschließung der Energieversorgungsleitungen 5, 6 durch die Ferritkerne 11, 12 zu optimieren, sind an dem I-Ferritkern 11 und an dem E-Ferritkern 12 einander zugewandte, plane Anlageflächen 28, 29 ausgebildet. Im montierten Zustand der Beleuchtungsanordnung sind die Anlageflächen 28, 29 aneinander flächig angelegt. Die Aufnahmetaschen 22, 23 für die Energieversorgungsleitungen 5, 6 sind an der dem E-Ferritkern 12 zugeordneten Anlagefläche 28 vorgesehen.

Um die flächige Anlage des E-Ferritkerns 12 an dem I-Ferritkern 11 weiter zu verbessern, ist jedem Ferritkernsegment 12.1, 12.2, 12.3, 12.4 ein Federelement 24, 25, 26, 27 zugeordnet. Die Federelemente 24, 25, 26, 27 sind gegen die Oberschale 4.1 des Energieversorgungsgehäuses 4 einerseits und die Ferritkernsegmente 12.1, 12.2, 12.3, 12.4 andererseits derart verspannt, dass der E-Ferritkern 12 mit der Anlagefläche 28 gegen die Anlagefläche 29 des I-Ferritkerns 11 angedrückt ist.

Durch das Vorsehen der kontaktlosen Energieversorgung der Beleuchtungsanordnung kann auf eine wasserdichte beziehungsweise gegen den Eintritt von Feuchtigkeit geschützte Ausbildung des Energieversorgungsgehäuses 4 verzichtet werden. Es ist insofern insbesondere vorgesehen, dass die Induktionsspulen 13, 14 als ummantelte beziehungsweise gekapselte beziehungsweise vergossene Induktionsspulen 13, 14 ausgebildet sind. Die Induktionsspulen 13, 14 werden über eine elektrische Zuleitung 15 mit der Ansteuerung des Leuchtmittels verbunden. Die Zuleitung 15 ist hierzu vom Energieversorgungsgehäuse 4 in das Leuchtmodulgehäuse 1 geführt. Die Induktionsspulen 13, 14 werden von einem Spulenträger 10 gestützt, welcher ebenfalls in den Aufnahmetaschen 22, 23 vorgesehen ist.

Die Federelemente 24, 25, 26, 27 sind beispielsweise nach Art von Blattfedern ausgebildet. Bevorzugt sind die Federelemente 24, 25, 26, 27 aus Edelstahl gefertigt und somit widerstandsfähig insbesondere gegen Umwelteinflüsse und Feuchtigkeit.

### Bezugszeichenliste

- 1: Leuchtmodulgehäuse
- 1.1: Lichtauslassgehäuseteil
- 1.2: Funktionskomponentengehäuseteil
- 2: Optik
- 3: Rippe
- 4: Energieversorgungsgehäuse
- 4.1: Oberschale
- 4.2: Unterschale
- 5: Energieversorgungsleitung
- 6: Energieversorgungsleitung
- 7: Zugangsöffnung
- 8: Zugangsöffnung
- 9: Ausgangsöffnung
- 10: Spulenträger
- 11: Ferritkern
- 12: Ferritkern
- 12.1: Ferritkernsegment
- 12.2: Ferritkernsegment
- 12.3: Ferritkernsegment
- 12.4: Ferritkernsegment
- 13: Induktionsspule
- 14: Induktionsspule
- 15: Zuleitung
- 16: Schraube
- 17: Gelenkarm
- 18: Gelenkhebel
- 19: Verbindungsklammer
- 20: Aufnahme
- 21: Haltekante
- 22: Aufnahmetasche
- 23: Aufnahmetasche
- 24: Federelement
- 25: Federelement
- 26: Federelement
- 27: Federelement
- 28: Anlagefläche
- 29: Anlagefläche

## Patentansprüche

1. Beleuchtungsanordnung für Flughäfen, insbesondere Unterflurfeuer, umfassend:
- ein mehrteilig ausgebildetes Leuchtmodulgehäuse (1) mit einem im montierten Zustand oberirdisch angeordneten Lichtauslassgehäuseteil (1.1) und mit einem im montierten Zustand unterirdisch angeordneten Funktionskomponentengehäuseteil (1.2), wobei in dem Leuchtmodulgehäuse (1) wenigstens ein Leuchtmittel zum Bereitstellen von Licht und mindestens eine dem wenigstens einen Leuchtmittel zugeordnete Optik (2) zum Formen einer Lichtverteilung sowie eine Ansteuerung für das wenigstens eine Leuchtmittel vorgesehen sind, und
- ein mehrteilig ausgebildetes Energieversorgungsgehäuse (4) mit einer an dem Funktionskomponentengehäuseteil (1.2) angelegten Oberschale (4.1) und einer mit der Oberschale (4.1) verbundenen Unterschale (4.2), wobei an dem Energieversorgungsgehäuse (4) wenigstens eine Zugangsöffnung (7, 8) und wenigstens eine Ausgangsöffnung (9) für eine erste Energieversorgungsleitung (5) und für eine zweite Energieversorgungsleitung (6) ausgebildet sind,
wobei den in dem Energieversorgungsgehäuse (4) geführten Abschnitten der Energieversorgungsleitungen (5, 6) je mindestens eine mit der Ansteuerung elektrisch leitend verbundene Induktionsspule (13, 14) zugeordnet ist derart, dass während des Betriebs eine Spannung in die Induktionsspulen (13, 14) induziert wird und mittels der induzierten Spannung das wenigstens eine Leuchtmittel betrieben wird, und wobei in dem Energieversorgungsgehäuse (4) ein erster Ferritkern (11) und ein zweiter Ferritkern (12) vorgesehen sind, die die Induktionsspulen (13, 14) und die Energieversorgungsleitungen (5, 6) mantelseitig umgreifen.

2. Beleuchtungsanordnung nach Anspruch 1, **dadurch gekennzeichnet, dass** ein Ferritkern (11) und bevorzugt der erste Ferritkern (11) flach und/oder scheibenförmig und/oder mit einer konstanten Dicke ausgeführt sind als I-Ferritkern.

3. Beleuchtungsanordnung nach Anspruch 1 oder 2, **dadurch gekennzeichnet, dass** wenigstens ein Ferritkern (12) und bevorzugt der zweite Ferritkern (12) ausgebildet ist mit zwei als Aufnahme für die Energieversorgungsleitungen (5, 6) dienenden, zueinander beabstandet angeordneten, nutförmigen Aufnahmetaschen (22, 23).

4. Beleuchtungsanordnung nach einem der Ansprüche 1 bis 3, **dadurch gekennzeichnet, dass** wenigstens ein Ferritkern (12) und bevorzugt der zweite Ferritkern (12) segmentiert ausgebildet ist, wobei in eine Längsrichtung der Energieversorgungsleitungen (5, 6) die Ferritkernsegmente (12.1, 12.2, 12.3, 12.4) aneinandergereiht sind.

5. Beleuchtungsanordnung nach einem der Ansprüche 1 bis 4, **dadurch gekennzeichnet, dass** an dem ersten Ferritkern (11) und an dem zweiten Ferritkern (12) je eine Anlagefläche (28, 29) ausgebildet ist, wobei die Anlageflächen (28, 29) im montierten Zustand einander zugewandt und aneinander angelegt sind.

6. Beleuchtungsanordnung nach einem der Ansprüche 3 bis 5, **dadurch gekennzeichnet, dass** der die Aufnahmetaschen (22, 23) aufweisende Ferritkern (12) nach Art eines E-Ferritkerns (12) ausgebildet ist, wobei die Aufnahmetaschen (22, 23) für die Energieversorgungsleitungen (5, 6) an der Anlagefläche (28) des E-Ferritkerns (12) vorgesehen sind.

7. Beleuchtungsanordnung nach einem der Ansprüche 1 bis 6, **dadurch gekennzeichnet, dass** in dem Energieversorgungsgehäuse (4) wenigstens ein Federelement (24, 25, 26, 27) vorgesehen ist, welches gegen einen Ferritkern (12) und bevorzugt gegen den E-Ferritkern (12) verspannt ist derart, dass der eine Ferritkern (12) und bevorzugt der E-Ferritkern (12) mit der Anlagefläche (28) gegen die Anlagefläche (29) des anderen Ferritkerns (11) und bevorzugt des I-Ferritkerns (11) angedrückt ist.

8. Beleuchtungsanordnung nach Anspruch 7, **dadurch gekennzeichnet, dass** für jedes Ferritkernsegment (12.1, 12.2, 12.3, 12.4) ein einzelnes Federelement (24, 25, 26, 27) vorgesehen ist.

9. Beleuchtungsanordnung nach einem der Ansprüche 4 bis 8, **dadurch gekennzeichnet, dass** die Ferritkernsegmente (12.1, 12.2, 12.3, 12.4) einander im montierten Zustand zugewandte Stirnseiten vorsehen, wobei die Aufnahmetaschen (22, 23) für die Energieversorgungsleitungen (5, 6) sich von einer ersten Stirnseite eines jeden Ferritkernsegments (12.1, 12.2, 12.3, 12.4) bis zu einer gegenüberliegenden zweiten Stirnseite erstrecken.

10. Beleuchtungsanordnung nach Anspruch 9, **dadurch gekennzeichnet, dass** einander zugewandte Stirnseiten benachbarter Ferritkernsegmente (12.1, 12.2, 12.3, 12.4) aneinander angelegt sind.

11. Beleuchtungsanordnung nach einem der Ansprüche 1 bis 10, **dadurch gekennzeichnet, dass** die Federelemente (24, 25, 26, 27) nach Art von Blattfedern (24, 25, 26, 27) und bevorzugt als Edelstahl-Blattfedern (24, 25, 26, 27) ausgebildet sind.

12. Beleuchtungsanordnung nach einem der Ansprüche 1 bis 11, **dadurch gekennzeichnet, dass** die Induktionsspulen (13, 14) nach Art von vergossenen Induktionsspulen (13, 14) ausgebildet sind.

13. Beleuchtungsanordnung nach einem der Ansprüche 1 bis 12, **dadurch gekennzeichnet, dass** zum Verbinden der Oberschale (4.1) des Energieversorgungsgehäuses (4) mit der Unterschale (4.2) des Energieversorgungsgehäuses (4) eine Schnellverschlussanordnung vorgesehen ist zur werkzeuglosen Montage und Demontage des Energieversorgungsgehäuses (4).

14. Beleuchtungsanordnung nach Anspruch 13, **dadurch gekennzeichnet, dass** die Schnellverschlussanordnung eine an der Oberschale (4.1) des Energieversorgungsgehäuses (4) schwenkbar gehaltene Verbindungsklammer (19) vorsieht und dass die Verbindungsklammer (19) im montierten Zustand des Energieversorgungsgehäuses (4) eine an der Unterschale (4.2) gebildete Haltekante (21) umgreift zur Verbindung der Oberschale (4.1) mit der Unterschale (4.2).

## Claims

1. Lighting arrangement for airports, in particular inpavement light, comprising:
- a multipart-formed lighting module housing (1) with a light outlet housing part (1.1) being arranged above ground in the mounted above state and with a function component housing part (1.2) being arranged under ground in the mounted state, wherein in the lighting module housing (1) at least one illuminant for providing light and at least one optics (2) being assigned to the at least one illuminant for forming a light distribution, and a drive for the at least one illuminant are provided, and
- a multipart-formed power supply housing (4) with an upper shell (4.1) applied to the functional component housing part (1.2) and a lower shell (4.2) being connected to the upper shell (4.1), wherein at least one access opening (7, 8) and at least one exit opening (9) are formed at the power supply housing (4) for a first power supply line (5) and for a second power supply line (6),
wherein at least one induction coil (13, 14) being connected in an electrically conductive manner to the drive is assigned to each of the sections of the power supply lines (5, 6) guided in the power supply housing (4) such that during operation a voltage is induced in the induction coils (13, 14) and by means of the induced voltage the at least one illuminant is operated, and wherein a first ferrite core (11) and a second ferrite core (12) are provided in the power supply housing (4) which enclose the induction coils (13, 14) and the power supply lines (5, 6) on the shell side.

2. Lighting arrangement according to claim 1, **characterized in that** a ferrite core (11) and preferably the first ferrite core (11) are formed flat and/or diskshaped and/or formed with a constant thickness as I-ferrite core.

3. Lighting arrangement according to claim 1 or 2, **characterized in that** at least one ferrite core (12) and preferably the second ferrite core (12) is formed with two groove-shaped receiving pockets (22, 23) being arranged spaced-apart and serving as a receptacle for the power supply lines (5, 6).

4. Lighting arrangement according to one of claims 1 to 3, **characterized in that** at least one ferrite core (12) and preferably the second ferrite core (12) is formed segmented, wherein the ferrite core segments (12.1, 12.2, 12.3 , 12.4) are strung together in a longitudinal direction of the power supply lines (5, 6).

5. Lighting arrangement according to one of claims 1 to 4, **characterized in that** on the first ferrite core (11) and the second ferrite core (12), respectively, a contact surface (28, 29) is formed, wherein the contact surfaces (28, 29) are facing each other and are applied to each other in the mounted state.

6. Lighting arrangement according to one of claims 3 to 5, **characterized in that** the ferrite core (12) having the receiving pockets (22, 23) is formed in the manner of an E-ferrite core (12), wherein the receiving pockets (22, 23) for the power supply lines (5, 6) are provided on the contact surface (28) of the E-ferrite core (12).

7. Lighting arrangement according to one of claims 1 to 6, **characterized in that** at least one spring element (24, 25, 26, 27) is provided in the power supply housing (4), which is biased against a ferrite core (12) and preferably against the E-ferrite core (12) such that the ferrite core (12) and preferably the E ferrite core (12) is pressed against the contact surface (29) of the other ferrite core (11) and preferably of the I-ferrite core (11) with its contact surface (28).

8. Lighting arrangement according to claim 7, **characterized in that** a single spring element (24, 25, 26, 27) is provided for each ferrite core segment (12.1, 12.2, 12.3, 12.4).

9. Lighting arrangement according to one of claims 4 to 8, **characterized in that** the ferrite core segments (12.1, 12.2, 12.3, 12.4) provide end faces which face each other in the mounted state, wherein the receiving pockets (22, 23) for the power supply lines (5, 6) extend from a first end face of each ferrite core segment (12.1, 12.2, 12.3, 12.4) to an opposite second end face.

10. Lighting arrangement according to claim 9, **characterized in that** mutually facing end faces of adjacent ferrite core segments (12.1, 12.2, 12.3, 12.4) are in mechanical contact with each other.

11. Lighting arrangement according to one of claims 1 to 10, **characterized in that** the spring elements (24, 25, 26, 27) are formed in the manner of leaf springs (24, 25, 26, 27) and preferably as stainless steel leaf springs (24, 25, 26, 27).

12. Lighting arrangement according to one of claims 1 to 11, **characterized in that** the induction coils (13, 14) are formed in the manner of molded induction coils (13, 14).

13. Lighting arrangement according to one of claims 1 to 12, **characterized in that** for connecting the upper shell (4.1) of the power supply housing (4) with the lower shell (4.2) of the power supply housing (4), a quick release arrangement is provided for tool-free assembly and disassembly of the power supply housing (4).

14. Lighting arrangement according to claim 13, **characterized in that** the quick-release arrangement provides a connection clamp (19) pivotably held on the upper shell (4.1) of the power supply housing (4) and **in that** in the mounted state of the power supply housing (4), the connecting clamp (19) engages a retaining edge (21) being formed at the lower shell (4.2), for connecting the upper shell (4.1) with the lower shell (4.2).

## Revendications

1. Dispositif d'éclairage pour aéroports, en particulier balise encastrée, comprenant :
- un boîtier de module de lampe (1) en plusieurs parties avec une partie de boîtier laissant passer la lumière (1.1) disposée au-dessus du sol et avec une partie de boîtier pour les composants fonctionnels (1.2) encastré dans le sol dans l'état monté, le boîtier de module de lampe (1) contenant au moins une lampe pour la production de lumière et au moins une optique (2) associée à l'au moins une lampe pour diffuser la lumière ainsi qu'une commande pour l'au moins une lampe, et
- un boîtier d'alimentation en énergie (4) en plusieurs parties avec une coque supérieure (4.1) posée sur la partie de boîtier pour les composants fonctionnels (1.2) et une coque inférieure (4.2) reliée à la coque supérieure (4.1), au moins une ouverture d'accès (7, 8) et au moins une ouverture de sortie (9) étant formées dans le boîtier d'alimentation en énergie (4) pour une première ligne d'alimentation en énergie (5) et une deuxième ligne d'alimentation en énergie (6),
dans lequel des parties des lignes d'alimentation en énergie (5, 6) passées dans le boîtier d'alimentation en énergie (4) sont associées chacune à au moins une bobine d'induction (13, 14) reliée de façon électriquement conductrice à la commande, de telle sorte que pendant le fonctionnement, une tension soit induite dans les bobines d'induction (13, 14) et l'au moins une lampe fonctionne au moyen de la tension induite, et dans lequel sont prévus dans le boîtier d'alimentation en énergie (4) un premier tore de ferrite (11) et un deuxième tore de ferrite (12) qui entourent comme une chemise les bobines d'induction (13, 14) et les lignes d'alimentation en énergie (5, 6).

2. Dispositif d'éclairage selon la revendication 1, **caractérisé en ce qu'**un tore de ferrite (11), de préférence le premier tore de ferrite (11), est réalisé avec une forme plate et/ou en forme de disque et/ou avec une épaisseur constante comme un tore de ferrite à section en I.

3. Dispositif d'éclairage selon la revendication 1 ou 2, **caractérisé en ce qu'**au moins un tore de ferrite (12), de préférence le deuxième tore de ferrite (12), est doté de deux poches de logement (22, 23) en forme de rainures disposées à distance l'une de l'autre, qui servent de logement pour les lignes d'alimentation en énergie (5, 6).

4. Dispositif d'éclairage selon l'une des revendications 1 à 3, **caractérisé en ce qu'**au moins un tore de ferrite (12), de préférence le deuxième tore de ferrite (12), est segmenté, les segments de tore de ferrite (12.1, 12.2, 12.3, 12.4) étant alignés les uns à la suite des autres dans le sens de la longueur des lignes d'alimentation en énergie (5, 6).

5. Dispositif d'éclairage selon l'une des revendications 1 à 4, **caractérisé en ce qu'**une surface d'appui (28, 29) est formée sur le premier tore de ferrite (11) et sur le deuxième tore de ferrite (12), les surfaces d'appui (28, 29) étant tournées l'une vers l'autre et posées l'une sur l'autre dans l'état monté.

6. Dispositif d'éclairage selon l'une des revendications 3 à 5, **caractérisé en ce que** le tore de ferrite (12) présentant les poches de logement (22, 23) est conformé comme un tore de ferrite à section en E (12), les poches de logement (22, 23) pour les lignes d'alimentation en énergie (5, 6) étant prévues sur la surface d'appui (28) du tore de ferrite à section en E (12).

7. Dispositif d'éclairage selon l'une des revendications 1 à 6, **caractérisé en ce qu'**est prévu dans le boîtier d'alimentation en énergie (4) au moins un élément de ressort (24, 25, 26, 27) qui est contraint vers un tore de ferrite (12), de préférence vers le tore de ferrite à section en E (12), de telle sorte qu'un tore de ferrite (12), de préférence le tore de ferrite à section en E (12), soit pressé avec la surface d'appui (28) contre la surface d'appui (29) de l'autre tore de ferrite (11), de préférence le tore de ferrite à section en I (11).

8. Dispositif d'éclairage selon la revendication 7, **caractérisé en ce qu'**un seul élément de ressort (24, 25, 26, 27) est prévu pour chaque segment de tore de ferrite (12.1, 12.2, 12.3, 12.4).

9. Dispositif d'éclairage selon l'une des revendications 4 à 8, **caractérisé en ce que** les segments de tore de ferrite (12.1, 12.2, 12.3, 12.4) présentent des faces d'extrémités tournées les unes vers les autres dans l'état monté, les poches de logement (22, 23) pour les lignes d'alimentation en énergie (5, 6) s'étendant d'une première face d'extrémité de chaque segment de tore de ferrite (12.1, 12.2, 12.3, 12.4) jusqu'à une deuxième face d'extrémité opposée.

10. Dispositif d'éclairage selon la revendication 9, **caractérisé en ce que** les faces d'extrémité tournées l'une vers l'autre de segments de tore de ferrite (12.1, 12.2, 12.3, 12.4) voisins sont appuyées les unes contre les autres.

11. Dispositif d'éclairage selon l'une des revendications 1 à 10, **caractérisé en ce que** les éléments de ressort (24, 25, 26, 27) sont conformés comme des ressorts à lames (24, 25, 26, 27), de préférence des ressorts à lames en acier (24, 25, 26, 27).

12. Dispositif d'éclairage selon l'une des revendications 1 à 11, **caractérisé en ce que** les bobines d'induction (13, 14) sont réalisées comme des bobines d'induction enrobées (13, 14).

13. Dispositif d'éclairage selon l'une des revendications 1 à 12, **caractérisé en ce que** pour assembler la coque supérieure (4.1) du boîtier d'alimentation en énergie (4) avec la coque inférieure (4.2) du boîtier d'alimentation en énergie (4), il est prévu un dispositif de fermeture rapide pour le montage et le démontage sans outils du boîtier d'alimentation en énergie (4).

14. Dispositif d'éclairage selon la revendication 13, **caractérisé en ce que** le dispositif de fermeture rapide comprend un étrier d'assemblage (19) retenu de façon pivotante sur la coque supérieure (4.1) du boîtier d'alimentation en énergie (4) et **en ce que** l'étrier d'assemblage (19) entoure, quand le boîtier d'alimentation en énergie (4) est dans l'état monté, un rebord de maintien (21) formé sur la coque inférieure (4.2) afin d'assembler la coque supérieure (4.1) avec la coque inférieure (4.2).
